# EUROPÄISCHE PATENTSCHRIFT

(11) **EP 0 901 811 B1**
(45) Veröffentlichungstag und Bekanntmachung des Hinweises auf die Patenterteilung: **14.01.2004**
(21) Anmeldenummer: 98116404.9
(22) Anmeldetag: 29.08.1998
(51) Int. Cl.: B01F 17/14, B01F 17/00

(54) **Mischungen von langkettigen Phosphorsäurealkylestern**
Mixtures of long chain alkyl esters of orthophosphoric acids
Mélanges d'esters alkylphosphoriques à longue chaine

(30) Priorität: 12.09.1997 DE 19740069
(43) Veröffentlichungstag der Anmeldung: 17.03.1999
(73) Patentinhaber: Clariant GmbH, 65929 Frankfurt am Main (DE)
(72) Erfinder: Turowski-Wanke, Angelika Dr., 65779 Kelkheim (DE); Löffler, Matthias Dr., 65527 Niedernhausen (DE); Eyrisch, Oliver Dr., 45127 Essen (DE)

(56) Entgegenhaltungen:
- EP-A- 0 227 012
- FR-A- 2 297 668

## Beschreibung

Die Erfindung betrifft Mischungen von langkettigen Phosphorsäurealkylestern und deren Verwendung als Emulgator, insbesondere in kosmetischen und pharmazeutischen Emulsionen. Diese Ester zeichnen sich aus durch eine sehr effektive Erniedrigung der Grenzflächenspannung, hohe Stabilität auch bei Temperaturbelastung und geringe Empfindlichkeit gegenüber Elektrolyten und Säuren.

Die Verwendung von Emulgatoren zur Herstellung von Cremes, Lotionen, Salben etc., die mehrere nicht miteinander mischbare Substanzen (z.B. Wasser, Öl, organische und anorganische Bestandteile) enthalten, ist lange bekannt. Als Emulgatoren wirken Tenside, z.B. Seifen von Alkalimetallen und Alkanolamine, Mono- und Diglycerinester von Fettsäuren, aber auch bestimmte Naturstoffe (z.B. Lecithine, Wachse) und anorganische Stoffe (z.B. Bentonite).

Aus EP-B-0 553 241 ist die Verwendung von Mischungen aus Alkyloligoglucosiden, Fettalkoholen und gegebenenfalls Polyglucose zur Herstellung von Emulsionen bekannt. In WO-92/07543 wird der Einsatz von Alkyloligoglucosiden mit Fettalkoholen und Partialglyceriden als kosmetische Emulgatoren beschrieben.

In EP-B-0 201 040 wird das Emulgiervermögen von Metallsalzen von Dialkylphosphaten und in EP-B-0 227 012 das von Monoalkyl-Phosphorsäureestern beschrieben.
GB-A-2 139 112 beschreibt eine Emulgatormischung bestehend aus Mono- und Diesterphosphorsäure, teilweise auch ethoxiliert, im Verhältnis 100 : 0 bis 70 : 30 sowie einem nichtionischen Tensid.

Der Einsatz von β-verzweigten Monoalkylphosphorsäureestern als Emulgator wird in EP-A-0 265 702 beschrieben.

FR-A-2 297 668 beschreibt Mischungen aus Mono- und Diphosphorsäureestern von geradkettigen und/oder verzweigten C₆-C₂₀-Alkohole. In der deutschen Patentanmeldung 197 07 800.1 sind ebenfalls Mischungen aus Mono-, Di- und Trialkylphosphorsäureestern und deren Verwendung als Emulgatoren beschrieben.

Bei all diesen Phosphorsäureestern gemäß dem Stand der Technik handelt es sich um Produkte, die sich entweder von einem linearen Fettalkohol oder von einem β-verzweigten Fettalkohol ableiten. Demgegenüber betrifft die vorliegende Erfindung solche Phosphorsäurealkylester, worin die Alkylgruppe eine Mischung aus linearen und β-verzweigten Alkylgruppen darstellt.

Gegenstand der Erfindung sind Mischungen von langkettigen Phosphorsäurealkylestern der Formel 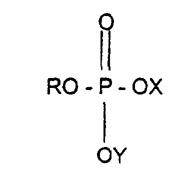 worin R eine Mischung aus C₁₄-C₂₀-, geradkettigen Alkylresten und C₁₄-C₂₀-β- verzweigten Alkylresten darstellt und X und Y gleich oder verschieden sind und Wasserstoff, Alkalimetall oder ein Äquivalent eines Erdalkalimetalls, Ammonium, Mono-, Di- oder Tri-alkylammonium oder eine organische Base bedeuten oder X und/oder Y die unter R genannte Bedeutung hat.

Organische Basen unter der Bedeutung von X und Y sind vorzugsweise basische Aminosäuren, wie etwa Arginin, Omithin, Lysin sowie Alkanolamine, wie Mono- oder Triethanolamin. X und/oder Y können die gleiche Bedeutung wie R haben. In diesen Fällen liegen Di- bzw. Tri-phosphorsäureester vor. Die beanspruchten Phosphorsäurealkylester können als reine Mono-, Di- oder Trialkylester vorliegen, bevorzugt sind Mischungen von Mono-, Di- und Trialkylestem im Mischungsverhältnis 30 - 60, 30 - 60 und 0 - 10 Gew.-% für die Mono-, Di- und Tri-ester. Insbesondere bevorzugt sind Mischungsverhältnisse von 30 - 50, 40 - 60 und 0 - 2 Gew.-%. Normalerweise ist der Anteil von Mono- und Di-estem etwa gleich groß.

Der Rest R in den erfindungsgemäßen Phosphorsäurealkylestern stellt eine Mischung aus geradkettigen und β-verzweigten Alkylresten dar. Der Anteil des linearen Alkylrests beträgt mehr als 0 Gew.-%, vorzugsweise 0,1 bis 99, insbesondere 0,1 bis 5 Gew.-%. Der Rest ist β-verzweigtes Alkyl.

Die Herstellung der erfindungsgemäßen Phosphorsäurealkylester erfolgt nach an sich bekannten Verfahren durch Umsetzung von Tetraphosphordecaoxid und einem Gemisch von geradkettigen und β-verzweigten C₁₄-C₂₀-Fettalkoholen im oben angegebenen Mischungsverhältnis. Bei den geradkettigen Fettalkoholen handelt es sich vorzugsweise um Gemische von Fettalkoholen, die sich von nativen Fettsäuren ableiten und dementsprechend Mischungen verschiedener Kettenlänge darstellen und daneben noch mehr oder weniger große Anteile ungesättigter Fettalkohole enthalten. Bei den β-verzweigten Fettalkoholen handelt es sich um sogenannte Guerbetalkohole, die durch die Guerbet-Synthese zugänglich sind (Ullmann's Enzyclopedia of Industrial Chemistry, 5th Edition, Vol A 10, p. 288). Bei der Synthese der Phosphorsäureester erhält man ein Gemisch aus Mono-, Di- und Tri-ester mit einem Anteil von ca. 2 Gew.-% an Tri-ester. Der Rest besteht zu ungefähr gleichen Teilen aus Mono- und Di-ester.

Die erfindungsgemäßen Phosphorsäureestergemische eignen sich generell zur Herstellung von tensidhaltigen Formulierungen, worin die Phosphorsäureester das Tensid darstellen. Darüberhinaus eignen sich diese Phosphorsäureestergemische auch als Emulgator für wasserhaltige Emulsionen vom Öl-in-Wasser oder Wasserin-Öl-Typ, beispielsweise Emulsionen kosmetischer oder pharmazeutischer Art, bevorzugt auch zur Herstellung alkoholfreier Emulsionen. Diese Emulsionen enthalten die erfindungsgemäßen Phosphorsäureestergemische in Mengen von 0,1 bis 5, vorzugsweise 0,3 bis 3 Gew.-%.

Die Leistungsstärke eines Emulgators korreliert mit der Erniedrigung der Grenzflächenspannung. Phosphorsäureester der oben beschriebenen Zusammensetzung zeichnen sich durch eine Erniedrigung der Grenzflächenspannung aus. Überraschenderweise wurde gefunden, daß die erfindungsgemäßen Phosphorsäureestergemische eine drastische Absenkung der Grenzflächenspannung bewirken, was die Leistungsstärke als Emulgator wiederspiegelt.

**Tabelle 1:**

| Grenzflächenspannungsverhalten verschiedener Phosphorsäureester gegenüber Ölen unterschiedlicher Polarität | | | |
|---|---|---|---|
| Phosphorsäureester | Paraffinöl | Cetearylisononanoat | Sojaöl |
| Lauryl | 28 | 16,5 | 16 |
| Stearyl | 16 | 15,8 | 15,5 |
| Isostearyl | 11 | 8,5 | 9,0 |
| Isooctadecyl | 1,5 | 2,5 | 3,0 |
| Oleyl | 13 | 11 | 9,0 |
| Behenyl | 36 | 24 | 17,5 |
| Octyldecyl * | 1,3 | 2,3 | 2,8 |
| Grenzflächenspannung in mN/m | | | |
| Temperatur 25°C, Konzentration 1,5 g Phosphorsäureester in 1 Liter Wasser, pH 7, Na-Salz. | | | |
| Die Bestimmung der Grenzflächenspannung erfolgte in einem Lauda Tropfenvolumen Tensiometer. | | | |

| | | | |
|---|---|---|---|
| *Octyldecyl bezeichnet eine Mischung aus 98,5 Gew.-% β-verzweigtem C₁₈-Fettalkyl und 1,5 Gew.-% linearem C₁₈-Fettalkyl. Der Begriff "Phosphorsäureester" in dieser Tabelle bedeutet eine Mischung aus ungefähr gleichen Teilen Mono- und Di-ester sowie einem geringen Anteil Tri-ester. | | | |

Vergleichsstudien des Emulgiervermögens des erfindungsgemäßen Octyldecylphosphats mit Stearylphosphat in Paraffinöl und Sojaöl in Abhängigkeit von der Emulgatorkonzentration bestätigen die hohe Effizient in der Erniedrigung der Grenzflächenspannung (Tabelle 2).

**Tabelle 2**

| Emulgator in Öl | Konz. (g/l) | Grenzflächenspannung (mN/m) |
|---|---|---|
| Stearylphosphat in Paraffinöl | 0,5 | 22,0 |
| | 1,0 | 17,0 |
| | 2,2 | 16,0 |
| | 5,0 | 17,5 |
| | | |
| Stearylphosphat in Sojaöl | 0,5 | 13,0 |
| | 1,0 | 12,5 |
| | 2,2 | 12,0 |
| | 5,0 | 11,5 |
| | | |
| Octyldecyl Phosphat in Paraffinöl | 0,5 | 17,0 |
| | 1,0 | 11,0 |
| | 2,2 | 1,7 |
| | 5,0 | 1,6 |
| | | |
| Octyldecyl Phosphat in Sojaöl | 0,5 | 2,8 |
| | 1,0 | 3,3 |
| | 2,2 | 3,6 |
| | 5,0 | 3,8 |

Stabilitätstests mit verschiedenen Ölen, wie Squalan, Sojaöl, Cetearylisononanoat, Isopropylpalmitat ergaben, daß die Emulsionen mit dem erfindungsgemäßen Octyldecyl-Phosphat als Emulgator im 90-Tage-Lagertest bei 40, 45 und 50°C keinerlei Entmischung zeigen. Vergleichbare Ergebnisse konnten mittels Zentrifugentest bei verschiedenen Emulgatorkonzentrationen erhalten werden. Die erfindungsgemäßen Emulgatoren zeichnen sich durch eine starke Erniedrigung der Grenzflächenspannung auch bei hoher Temperaturbelastung gegenüber polaren und unpolaren Bestandteilen aus. Die zum Teil flüssigen Emulgatoren zeigen eine verbesserte Stabilität gegenüber Elektrolytzusätzen und Säuren und eine hohe Lagerstabilität. Sie liegen im pH-Bereich 5 bis 7 vor und können somit als sehr hautfreundliche Emulgatoren sowohl in Öl-in-Wasser als auch in Wasser-in-Öl-Emulsionen eingesetzt werden, bevorzugt in Hautpflegemitteln.

Der nichtwäßrige Anteil der Emulsionen, der sich weitgehend aus dem Emulgator- und dem Ölkörper zusammensetzt liegt, üblicherweise bei 5 bis 95 % und vorzugsweise 15 bis 75 Gew.-%. Das bedeutet, daß die Emulsionen 5 bis 95 und vorzugsweise 25 bis 85 Gew.-% Wasser enthalten können, abhängig davon, ob Lotionen mit einer vergleichsweise niedrigen oder Cremes und Salben mit hoher Viskosität hergestellt werden sollen.

Als Ölkörper kommen beispielsweise Guerbetalkohole auf Basis von Fettalkoholen mit 6 bis 18, vorzugsweise 8 bis 10 Kohlenstoffatomen, Ester von linearen C₆-C₁₃-Fettsäuren mit linearen C₆-C₂₀-Fettalkoholen, Ester von verzweigten C₆-C₁₃-Carbonsäuren mit linearen C₆-C₂₀-Fettalkoholen, Ester von linearen C₆-C₁₈-Fettsäuren mit verzweigten Alkoholen, insbesondere 2-Ethylhexanol, Ester von linearen und/oder verzweigten Fettsäuren mit mehrwertigen Alkoholen (wie z.B. Dimerdiol oder Trimerdiol) und/oder Guerbetalkoholen, Triglyceride auf Basis C₆-C₁₀-Fettsäuren, pflanzliche Öle, verzweigte primäre Alkohole, substituierte Cyclohexane, Guerbetcarbonate, Dialkylether und/oder aliphatische bzw. aromatische Kohlenwasserstoffe in Betracht. Der Anteil der Ölkörper am nichtwäßrigen Anteil der Emulsionen kann 5 bis 95 und vorzugsweise 15 bis 75 Gew.-% ausmachen.

Die Emulsionen können als Hautpflegemittel, wie beispielsweise Tagescremes, Nachtcremes, Pflegecremes, Nährcreme, Bodylotions, Salben und dergleichen eingesetzt werden und als weitere Hilfs- und Zusatzstoffe, Co-Emulgatoren, Überfettungsmittel, Fette, Wachse, Stabilisatoren, biogene Wirkstoffe, Glycerin, Konservierungsmittel, Farb- und Duftstoffe enthalten.

Wesentlich für die Erfindung ist, daß die beschriebenen Mischungen der Phosphorsäureester auch ohne Mitverwendung eines nicht-ionischen Tensids als Co-Emulgator eingesetzt werden können. Die Mitverwendung von Co-Emulgatoren ist daher nicht zwingend, aber möglich.

Als nichtionogene O/W-Co-Emulgatoren kommen in Betracht Anlagerungsprodukte von 2 bis 30 Mol Ethylenoxid und/oder 0 bis 5 Mol Propylenoxid an lineare Fettalkohole mit 8 bis 22 C-Atomen, an Fettsäuren mit 12 bis 22 C-Atomen und an Alkylphenole mit 8 bis 15 C-Atomen in der Alkylgruppe; C₁₂-C₁₈-Fettsäuremono- und - diester von Anlagerungsprodukten von 1 bis 30 Mol Ethylenoxid an Glycerin; Glycerinmono- und -diester und Sorbitanmono- und -diester von gesättigten und ungesättigten Fettsäuren mit 6 bis 22 Kohlenstoffatomen und deren Ethylenoxidanlagerungsprodukten; Anlagerungsprodukte von 15 bis 60 Mol Ethylenoxid an Rizinusöl und/oder gehärtetes Rizinusöl; Polyol- und insbesondere Polyglycerinester wie z.B. Polyglycerinpolyricinoleat und Polyglycerinpoly-12-hydroxystearat. Ebenfalls geeignet sind Gemische von Verbindungen aus mehreren dieser Substanzklassen. Die Anlagerungsprodukte von Ethylenoxid und/oder Propylenoxid an Fettalkohole, Fettsäuren, Alkylphenole, Glycerin-mono- und - diester sowie Sorbitanmono- und -diester von Fettsäuren oder an Rizinusöl stellen bekannte, im Handel erhältliche Produkte dar. Es handelt sich dabei um Homologengemische, deren mittlerer Alkoxilierungsgrad dem Verhältnis der Stoffmengen von Ethylenoxid und/oder Propylenoxid und Substrat, mit denen die Anlagerungsreaktion durchgeführt wird, entspricht. C₁₂-C₁₈-Fettsäuremono- und - diester von Anlagerungsprodukten von Ethylenoxid an Glycerin sind aus DE-20 24 051 als Rückfettungsmittel für kosmetische Zubereitungen bekannt.

Als Überfettungsmittel können Substanzen wie beispielsweise polyethoxilierte Lanolinderivate, Lecithinderivate, Polyolfettsäureester, Monoglyceride und Fettsäurealkanolamide verwendet werden, wobei die letzteren gleichzeitig als Schaumstabilisatoren dienen. Typische Beispiele für Fette sind Glyceride, als Wachse kommen u.a. Bienenwachs, Paraffinwachs oder Mikrowachse, gegebenenfalls in Kombination mit hydrophilen Wachsen, z.B. Cetylstearylalkohol in Frage. Als Stabilisatoren können Metallsalze von Fettsäuren, wie z.B. Magnesium-, Aluminium- und/oder Zinkstearat eingesetzt werden. Unter biogenen Wirkstoffen sind beispielsweise Pflanzenextrakte und Vitaminkomplexe zu verstehen. Als Konservierungsmittel eignen sich beispielsweise Phenoxyethanol, Formaldehydlösung, Parabene, Pentandiol oder Sorbinsäure. Als Perlglanzmittel kommen beispielsweise Glycoldistearinsäureester wie Ethylenglycoldistearat, aber auch Fettsäuremonoglycolester in Betracht. Als Farbstoffe können die für kosmetische Zwecke geeigneten und zugelassenen Substanzen verwendet werden, wie sie beispielsweise in der Publikation "Kosmetische Färbemittel" der Farbstoffkommission der Deutschen Forschungsgemeinschaft, Verlag Chemie, Weinheim, 1984, S. 81 - 106, zusammengestellt sind.

Der Gesamtanteil der Hilfs- und Zusatzstoffe kann 1 bis 10, vorzugsweise 2 bis 5 Gew.-%, bezogen auf das Mittel, betragen. Die Herstellung der Mittel kann in an sich bekannter Weise, d.h. beispielsweise durch Heiß-, Heiß-Heiß/Kalt- bzw. PIT-Emulgierung erfolgen.

### Beispiele

### I. O/W-Hautmilch

### Zusammensetzung

| | | |
|---|---|---|
| A | Octyldecyl Phosphat | 1,50 % |
| | (erfindungsgemäße Mischung von C₁₈-Alkylphosphaten mit einem Gehalt von ca. 1,5 % an linearem Alkyl) | |
| | Paraffinöl, niedrigviskos | 5,00 % |
| | ®Miglyol 812 (Dynamit Nobel) | 4,00 % |
| | Caprylic/Capric Triglyceride Isopropylpalmitat | 6,00 % |
| | Jojobaöl | 2,00 % |
| | Sojaöl | 3,00 % |
| | | |
| B | ®Carbopol 980 (Goodrich) | 0,50 % |
| | | |
| C | ®Aquamollin BC Plv. Hochkonz. (Clariant GmbH) | 0,10 % |
| | Citronensäure (10 %ig) | 0,30 % |
| | NaOH (10 %ig) | 3,20 % |
| | Glycerin | 3,00 % |
| | Wasser | 71,0 % |
| | Konservierungsmittel | q.s. |
| | | |
| D | Parfümöl | 0,30 % |

### Herstellung

I B in A eintragen, anschließend C einrühren und gut verrühren
II D in I einrühren
III abschließend die Emulsion homogenisieren
II O/W-Creme

### Zusammensetzung

| | | |
|---|---|---|
| A | Octyldecyl Phosphat (analog Beispiel I) | 1,00 % |
| | ®Hostacerin DGMS (Clariant GmbH) | 2,50 % |
| | Polyglycerin-2-Stearat | |
| | ®Miglyol 812 (Dynamit Nobel) | 3,00 % |
| | Caprylic/Capric Triglyceride | |
| | ®Cetiol SN (Henkel KGaA) | 4,00 % |
| | Cetearylisononanoat | |
| | Isopropylpalmitat | 5,00 % |
| | Weizenkeimöl | 1,00 % |
| | Jojobaöl | 3,00 % |
| | Sojaöl | 4,00 % |
| | | |
| B | ®Carbopol 980 (Goodrich) | 0,60 % |
| | | |
| C | ®Hostapon KCG (Clariant GmbH) | 0,60 % |
| | Sodium Cocoyl Glutamate | |
| | Aquamollin BC Plv. Hochkonz. (Clariant GmbH) | 0,10 % |
| | Citronensäure (10 %ig) | 0,30 % |
| | NaOH (10 %ig) | 2,90 % |
| | Glycerin | 3,00 % |
| | Wasser | 68,60 % |
| | Konservierungsmittel | q.s. |
| | | |
| D | Parfümöl | 0,40 % |

### Herstellung

I A bei ca. 80°C aufschmelzen, anschließend B eintragen
II C auf ca. 80°C erwärmen
III II unter Rühren I zusetzen und kaltrühren
IV bei ca. 35°C in III einrühren
V anschließend die Emulsion homogenisieren.

### III O/W-Hautmilch

### Zusammensetzung

| | | |
|---|---|---|
| A | Octyldecyl Phosphat (analog Beispiel I) | 1,50 % |
| | Hostacerin DGI (Clariant GmbH) | 2,00 % |
| | Paraffinöl, niedrigviskos | 8,00 % |
| | Isopropylpalmitat | 6,00 % |
| | Cetiol 868 (Henkel KGaA) | 5,00 % |
| | | |
| B | ®Carbopol 980 (Goodrich) | 0,40 % |
| | | |
| C | Wasser | 75,20 % |
| | Natronlauge (10 %ig) | 1,60 % |
| | Konservierungsmittel | q.s. |
| | | |
| D | Parfümöl | 0,30 % |

### Herstellung

I B in A eintragen, anschließend C einrühren und gut verrühren
II D in I einrühren
III abschließend die Emulsion homogenisieren

### Chemische Bezeichnungen der Handelsnamen

| | |
|---|---|
| Carbopol 980 | Acrylsäure-Polymerisate |
| Miglyol 812 | Caprylic/Capric-Triglyceride |
| Aquamolin BC Plv. Hochkonz. | Ethylendiamin-tetraacetat, Natrium-Salz |
| Hostacerin DGMS | Polyglyceryl-2-stearat |
| Cetiol SN | Cetearyl Isononanoat |
| Cetiol 868 | Isooctylstearat |
| Hostapon KCG | Natrium Cocoyl Glutamat |
| Hostacerin DGI | Polyglyceryl-2 Sesquiisostearat |

## Patentansprüche

1. Mischungen von langkettigen Phosphorsäurealkylestern der Formel 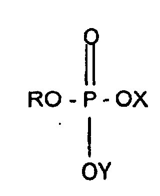 worin R eine Mischung aus C₁₄-C₂₀-geradkettigen Alkylresten und C₁₄-C₂₀-*β*-verzweigten Alkylresten darstellt und X und Y gleich oder verschieden sind und Wasserstoff, Alkalimetall oder ein Äquivalent eines Erdalkalimetalls, Ammonium, Mono-, Di- oder Tri-alkylammonium oder eine organische Base bedeuten oder X und/oder Y die unter R genannte Bedeutung hat.

2. Mischungen von langkettigen Phosphorsäurealkylestem nach Anspruch 1, **dadurch gekennzeichnet, daß** R eine Mischung aus 0,1 bis 99 Gew.-% linearem Alkyl und 99,9 bis 1 Gew.-% β-verzweigtem Alkyl darstellt.

3. Mischungen von langkettigen Phosphorsäurealkylestern nach Anspruch 1, **dadurch gekennzeichnet, daß** R eine Mischung aus 0,1 bis 5 Gew.-% linearem Alkyl und 99,9 bis 95 Gew.-% β-verzweigtem Alkyl darstellt.

4. Mischungen von langkettigen Phosphorsäurealkylestern nach Anspruch 1, **dadurch gekennzeichnet, daß** sie aus 30 - 60 Gew.-% Mono-ester, 30 - 60 Gew.-% Di-ester und 0 - 10 Gew.-% Tri-ester bestehen.

5. Tensidhaltige Formulierungen enthaltend eine Mischung von langkettigen Phosphorsäurealkylestern nach Anspruch 1.

6. Wasserhaltige Emulsionen enthaltend eine Mischung von langkettigen Phosphorsäurealkylestern nach Anspruch 1.

7. Wasserhaltige Emulsionen enthaltend 0,1 bis 5 Gew.-% einer Mischung von langkettigen Phosphorsäurealkylestern nach Anspruch 1.

## Claims

1. A mixture of long-chain alkyl phosphates of the formula 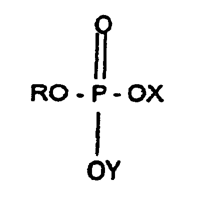 in which R is a mixture of C₁₄-C₂₀-straight-chain alkyl radicals and C₁₄-C₂₀-β- branched alkyl radicals, and X and Y are identical or different and are hydrogen, alkali metal or an equivalent of an alkaline earth metal, ammonium, mono-, di- or tri-alkylammonium or an organic base, or X and/or Y are as defined under R.

2. The mixture of long-chain alkyl phosphates as claimed in claim 1, wherein R is a mixture of from 0.1 to 99% by weight of a linear alkyl and from 99.9 to 1% by weight of a β-branched alkyl.

3. The mixture of long-chain alkyl phosphates as claimed in claim 1, wherein R is a mixture of from 0.1 to 5% by weight of a linear alkyl and from 99.9 to 95% by weight of a β-branched alkyl.

4. The mixture of long-chain alkyl phosphates as claimed in claim 1, which comprises 30 - 60% by weight of monoesters, 30 - 60% of diesters and 0 - 10% by weight of triesters.

5. A surfactant-containing formulation comprising a mixture of long-chain alkyl phosphates as claimed in claim 1.

6. An aqueous emulsion comprising a mixture of long-chain alkyl phosphates as claimed in claim 1.

7. An aqueous emulsion comprising from 0.1 to 5% by weight of a mixture of long-chain alkyl phosphates as claimed in claim 1.

## Revendications

1. Mélanges d'esters alkyliques d'acide phosphorique à longue chaîne de formule 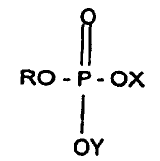 dans laquelle R représente un mélange de résidus alkyle à chaîne linéaire en C₁₄ à C₂₀ et de résidus alkyle β-ramifiés en C₁₄ à C₂₀ et X et Y sont identiques ou différents et représentent un atome d'hydrogène, un métal alcalin ou un équivalent d'un métal alcalino-terreux, un groupe ammonium, mono-, di- ou tri-alkylammonium ou une base organique ou X et/ou Y a la signification indiquée pour R.

2. Mélanges d'esters alkyliques d'acide phosphorique à longue chaîne selon la revendication 1, **caractérisés en ce que** R représente un mélange de 0,1 à 99 % en poids d'un alkyle linéaire et de 99,9 à 1% en poids d'un alkyle β-ramifié.

3. Mélanges d'esters alkyliques d'acide phosphorique à longue chaîne selon la revendication 1, **caractérisés en ce que** R représente un mélange de 0,1 à 5 % en poids d'un alkyle linéaire et de 99,9 à 95 % en poids d'un alkyle β-ramifié.

4. Mélanges d'esters alkyliques d'acide phosphorique à longue chaîne selon la revendication 1, **caractérisés en ce qu'**ils sont constitués de 30 à 60 % en poids de monoesters, de 30 à 60 % en poids de di-esters et de 0 à 10 % en poids de tri-esters.

5. Formulations à base d'agents tensio-actifs contenant un mélange d'esters alkyliques d'acide phosphorique à longue chaîne selon la revendication 1.

6. Emulsions aqueuses contenant un mélange d'esters alkyliques d'acide phosphorique à longue chaîne selon la revendication 1.

7. Emulsions aqueuses contenant de 0,1 à 5 % en poids d'un mélange d'esters alkyliques d'acide phosphorique à longue chaîne selon la revendication 1.
